# EUROPEAN PATENT SPECIFICATION

(11) **EP 3 010 722 B1**
(45) Date of publication and mention of the grant of the patent: **05.06.2019**
(21) Application number: 13887563.8
(22) Date of filing: 20.06.2013
(51) Int. Cl.: B41J 2/435, B29C 64/129, B29C 64/20, B33Y 10/00, B33Y 30/00

(54) **PATTERN-FORMING THREE-DIMENSIONAL PRINTING SYSTEM AND METHOD THEREOF**
DREIDIMENSIONALES MUSTERBILDENDES DRUCKSYSTEM UND VERFAHREN DAFÜR
SYSTÈME D'IMPRESSION TRIDIMENSIONNELLE DE FORMATION DE MODÈLE, ET SON PROCÉDÉ

(43) Date of publication of application: 27.04.2016
(73) Proprietor: Hewlett-Packard Development Company, L.P., Spring TX 77389 (US)
(72) Inventor: NAUKA, Krzysztof, Palo Alto, California 94304-1100 (US); GANAPATHIAPPAN, Sivapackia, Palo Alto, California 94304-1100 (US); NG, Hou, T., Palo Alto, California 94304-1100 (US)
(74) Representative: Haseltine Lake Kempner LLP
(86) International application number: PCT/US2013/046895
(87) International publication number: WO 2014/204476

(56) References cited:
- EP-A1- 1 192 041
- WO-A1-2012/166505
- US-A- 5 171 490
- US-A- 5 644 136
- US-A1- 2006 054 039
- US-A1- 2012 165 969
- US-B1- 6 531 086
- US-B1- 6 850 334

## Description

### BACKGROUND

Due to recent printing innovations and cost reductions in materials, three-dimensional printing has gained significant popularity amongst businesses and consumers alike. Moreover, three-dimensional printing is considered by many to be a key technology that may facilitate reinvention of many manufacturing processes by providing made-on-demand production capabilities. Manufacturing through three-dimensional printing is inherently coupled to development of information technology and analogously to digital industrial printing. Despite progress in both areas, three-dimensional printing still requires further development and advancement in order to become a true alternative to the manufacture of goods.
US 6 531 086 B1 describes a method and device for manufacturing three-dimensional bodies wherein a masking device is arranged over a particle layer, and the particle layer is exposed to a radiation pattern defined by the masking device. US 5 171 490 A describes a method of preparing three-dimensional objects from uncured photopolymer by depositing the photopolymer in layers and treating it with radiation to convert it into a cohesive structure. EP 1 192 041 A1 describes a method for producing a three-dimensional object by solidifying a material in layers using radiation, wherein said radiation is defined by a mask. US5386500 discloses a method of pattern-forming three-dimensional printing wherein a masking device is formed by a pattern of toner onto a moveable flexible band.

### BRIEF DESCRIPTION OF THE DRAWINGS

The features and advantages of the inventions as well as additional features and advantages thereof will be more clearly understood hereinafter as a result of a detailed description of particular embodiments of the invention when taken in conjunction with the following drawings in which:
FIG. 1 is a simplified diagram of a pattern-forming three-dimensional printing system according to an example implementation.
FIG. 2 is a simplified side profile view of the pattern-forming three-dimensional printing system according to an example implementation.
FIG. 3 is a three-dimensional perspective view of a pattern-forming three-dimensional printing system according to an example implementation.
FIG. 4 is a simplified flow chart of the processing steps for providing a pattern-forming three-dimensional printing system according to an example implementation.
FIG. 5 is a simplified another flow chart of the processing steps for providing a pattern-forming three-dimensional printing system according to an example implementation.

### DETAILED DESCRIPTION OF THE INVENTION

The following discussion is directed to various examples. Although one or more of these examples may be discussed in detail, the implementations disclosed should not be interpreted, or otherwise used, as limiting the scope of the disclosure, including the claims. In addition, one skilled in the art will understand that the following description has broad application, and the discussion of any implementations is meant only to be an example of one embodiment, and not intended to intimate that the scope of the disclosure, including the claims, is limited to that embodiment. Furthermore, as used herein, the designators "A", "B" and "N" particularly with respect to the reference numerals in the drawings, indicate that a number of the particular feature so designated can be included with examples of the present disclosure. The designators can represent the same or different numbers of the particular features.

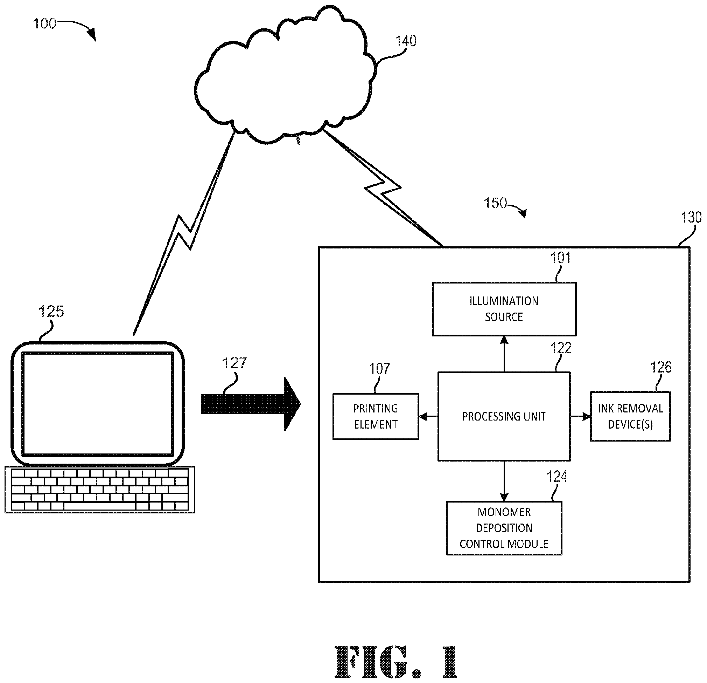

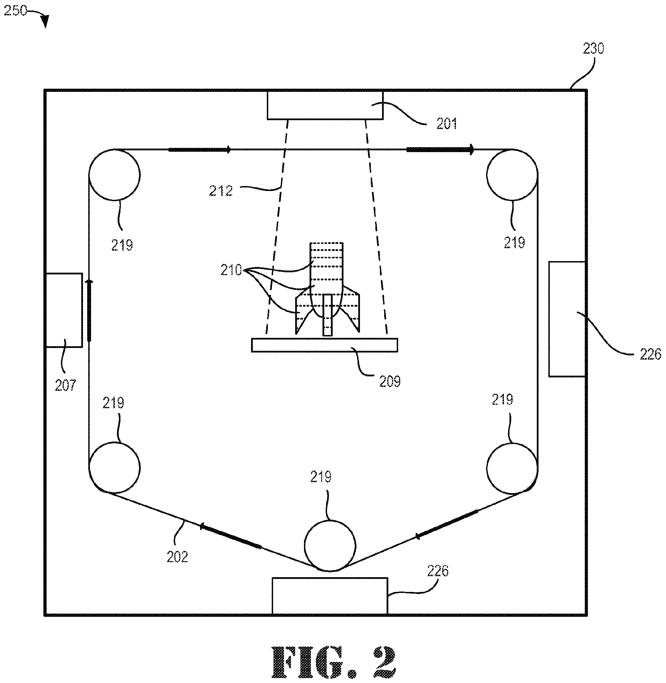

The figures herein follow a numbering convention in which the first digit or digits correspond to the drawing figure number and the remaining digits identify an element or component in the drawing. Similar elements or components between different figures may be identified by the use of similar digits. For example, 143 may reference element "43" in Figure 1, and a similar element may be referenced as 243 in Figure 2. Elements shown in the various figures herein can be added, exchanged, and/or eliminated so as to provide a number of additional examples of the present disclosure. In addition, the proportion and the relative scale of the elements provided in the figures are intended to illustrate the examples of the present disclosure, and should not be taken in a limiting sense.

Presently, three major techniques for three-dimensional printing are widely adopted. One, fused deposition molding (FDM) is based on the idea of extruding a liquid (or quasi-liquid) plastic through a nozzle and allowing that liquid to solidify shortly after the extrusion while computer-controlled movement of the nozzle facilitates formation of a desired three-dimensional shape. Though the simplicity of this technique makes it one of the more popular 3D current printing technique, there are major disadvantages associated with the FDM process. For example, crudeness of the formed shapes - due to the relatively large diameter of extruded plastic - causes crudeness in the formed shape. Moreover, mechanical weakness is often present along the boundaries between the adjacent extruded plastic lines, in addition to a limited number of materials conducive to this printing process.

Additional three-dimensional printing techniques include selective heat sintering (SHS) and selective later sintering (SLS). In some of these sintering-based techniques, resin powder including thin layers of resin particles, is locally heated up to a temperature at which bonding starts to occur between the partially melted adjacent grains. After shape formation within a thin layer is completed, unbounded grains may be removed, a new layer of powder is deposited and the process is repeated. Three-dimensional shaping is accomplished by either point-by-point heating of the powder using a narrow high-intensity infrared beam or by wide-area infrared illumination using some form of pattern-forming scheme. For example, shaping may occur through pattern illumination using a MEMS-based digital light processing (DLP) engine; wide area illumination through a LCD screen or a "hard mask; or by locally varying reflectivity of illuminated area to achieve the desired pattern. However, these sintering 3D printing techniques suffer from unreliable replenishing of the resin powder, difficulties in controlling bond formation, and low printing speeds.

Still further, three-dimensional objects may be created using photopolymer-based printing techniques such as stereolithography (SLA) and digital light processing (DLP). In these prior solutions, a selected region of a thin layer light-sensitive monomer is exposed to an appropriate wavelength light, which causes monomer cross-linking and formation of a rigid polymer. After the photopolymerization step is completed, the sample is coated with another monomer layer and the process is repeated. Similarly to the powder sintering techniques described above, there are a number of various implementations of photopolymer-based printing scheme including: pattern-forming by ink-jetting of a monomer followed by wide area light exposure; formation of a wide area thin monomer layer subsequently exposed to patterned light by using a rastered laser beam; or wide area exposure with a digital light engine (light passed through an liquid crystal display or steered with an assembly of MEMS mirrors producing a desired illumination pattern). However, many of the applicable monomer materials for DLP and SLA printing require ultraviolet polymerization, while a substantial and growing number of materials are now amenable to polymerization via a short-wavelength visible light (e.g., blue and green diodes). The latter group of materials is particularly attractive because many 3D printing applications may not allow use of ozone producing ultraviolet. Additionally, recent development of gallium nitride "blue" high-power light emitting diodes offer a preferred alternative to traditional broadband visible light sources.

Overall, the DLP three-dimensional printing process can provide much higher resolution and corresponding fidelity and surface quality than FDM printing process. However, drawbacks in the DLP process relate to the relatively small number of health-neutral monomer materials cross-linkable by a visible light, and also to the inability to preferentially illuminate the monomer layer with sufficiently high light intensity to achieve an effective number of cross-linked polymer bonds within a short time. For example, the time necessary to complete crosslinking within a material can be related to the number of cross-linking events per unit time and, in most cases, directly relates to the illumination intensity (i.e., photon flux). The second challenge is also important since the existing solutions can be prohibitively expensive and use of a wide area light source emitting visible light beam through a LC screen or through a digital light engine may only produce - due to concerns that the high intensity light beam may cause damage to a fragile LC screen or to the light engine - relatively low-powered illumination that requires extended crosslinking time at each step and undesirably lengthens the overall 3D printing process. Moreover, even when the high-intensity beam is allowed to pass through the pattern-forming devices, light loss within these devices (typically reaching 60% to 90%) can reduce the beam intensity to an unsatisfactory level. Thus, there is a need in the art for a simple and inexpensive method for creating a light pattern on the surface of thin-layer monomers regardless of the intensity of the illumination beam.

Examples of the present disclosure provide a system and method for optically-transferred pattern-forming on three-dimensional printing medium. In one implementation, a layer of material curable by light in a predetermined wavelength range is deposited. A pattern of ink opaque to light in a predetermined wavelength range is then printed on the surface of a flexible band. Thereafter, light rays are applied (through the flexible band) in the predetermined wavelength to the deposited material so as to cure the material in those regions on which no ink is printed. Implementations described herein serve to eliminate emitted power limitations present in alternative optical pattern transfer techniques (e.g., DLP engine, wide area LCD projection, or raster narrow beam), thus accelerating the 3D printing process and providing a more cost-effective printing solution.

Referring now in more detail to the drawings in which like numerals identify corresponding parts throughout the views, FIG. 1 is a simplified diagram of a pattern-forming three-dimensional printing system according to an example implementation. As shown in this example, the system 100 includes a source computing device 125, a three-dimensional printing device 150, and network 140. The source computing device 125 represents a desktop computer, mobile computer (e.g., laptop, tablet, smartphone, etc.), server or similar device operated by a user and configured to communicate with the 3D printing device 150. Moreover, the source computing device 125 may be configured to communicate directly with the printing device via communication interface 127. Communication interface 127 may be a wired connection or represent wirelessly communication protocol such as near field communication, Bluetooth®, wireless-fidelity (Wi-Fi), or a similar data exchange protocol for establishing wireless communication between two nearby devices. Moreover, communication between the source device 125 and 3D printing device 150 may be accomplished via a communication network 140. More particularly, communication network 140 can use wired communications, wireless communications, or combinations thereof. Further, the communication network 140 can include multiple sub communication networks such as data networks, wireless networks, telephony networks, etc. Such networks can include, for example, a public data network such as the Internet, local area networks (LANs), wide area networks (WANs), metropolitan area networks (MANs), cable networks, fiber optic networks, combinations thereof, or the like. In certain examples, wireless networks may include cellular networks, satellite communications, wireless LANs, etc. Further, the communication network 140 can be in the form of a direct network link between devices (e.g., computing device 125 and printing device 140). Various communications structures and infrastructure can be utilized to implement the communication network(s).

According to one example implementation, the printing system 150 includes a processing unit 122, printing element 107, illumination source 101, ink removal devices 126, and a monomer deposition control module 107. In one implementation, the printing element 107 represents a thermal or piezoelectric inkjet print element configured to deposit ink on a print surface (e.g., a flexible band). The illumination source 101 represents a light emitting diode (e.g., gallium nitride "blue" diode) configured to produce short-wavelength visible light for enabling cross-linking or bonding of curable material that receives the visible light as will be appreciated by one skilled in the art. More particularly, the illumination source 101 enables for polymerization in which a deposited thin layer of monomers are cured and bonded together to form a rigid polymer layer. Processor unit 122 may be, at least one central processing unit (CPU), at least one semiconductor-based microprocessor, at least one graphics processing unit (GPU), other hardware devices suitable for retrieval and execution of instructions associated with the pattern-forming three-dimensional system described herein. For example, the processing unit 122 may include multiple cores on a chip, include multiple cores across multiple chips, multiple cores across multiple devices (e.g., if the printing device 150 includes multiple node devices), or combinations thereof. As an alternative or in addition to retrieving and executing instructions, processor 122 may include at least one integrated circuit (IC), other control logic, other electronic circuits, or combinations thereof that include a number of electronic components for performing the functionality of instructions for facilitating the three-dimensional printing process. For example, the processing unit 122 may communicate with the printing element 107 to control the flow of ink onto a moveable print element (e.g., flexible band). In addition, the processing unit 122 may be utilized to control the intensity of emitted light from the illumination source 101 and the level of ink removal from the ink removal devices 126. In some implementations, the processing unit 122 communicates with the monomer deposition control module 124, which is configured to control the flow and deposition of monomer layers onto a monomer tray for facilitating the formation of a desired three-dimensional object as will be described in further detail below.

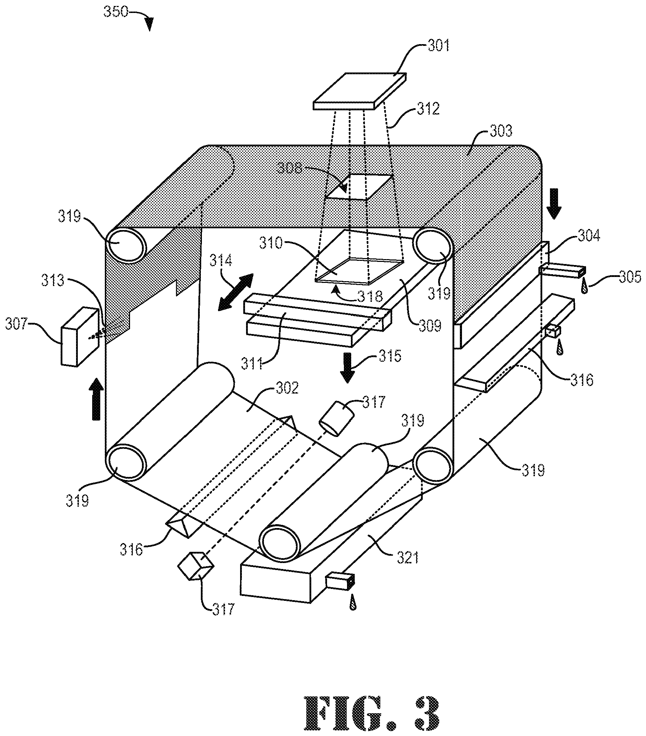

FIG. 2 is a simplified side profile view of the pattern-forming three-dimensional printing system according to an example implementation. As shown here, the three-dimensional printing device 250 includes a casing 230 for housing a moveable element 202, an ink loading element 207, energy or light source 201, and ink removal elements 226. In one example, multiple roller elements 219 are positioned around the monomer tray 209 near edges of the printing device 250 and are configured to move the moveable element 202 (e.g., flexible plastic band) around the outer perimeter of the roller elements 219 as indicated by the directional arrows. Moreover, the energy source 201 is formed near an upper area of the printing device 250 and is configured to cast radiant energy (e.g., light rays) of a predetermined wavelength 212 onto a monomer tray 209 having one or more monomer layers 210 formed thereon as will be described in further detail with reference to FIG. 3. More particularly, energy source 201 is configured to provide sufficient illumination and light rays 212 so as to cause the thin layer of monomers receiving the light to bond together (i.e., monomer cross-linking) in accordance with a desired pattern printed on the flexible band 202 and wavelength 212. As will be appreciated by those skilled in the art, effective curing occurs when a sufficient number of energetic photons (e.g., from light source) reach the cured area. Moreover, the number of photons reaching the cured area may represent the photon flux multiplied by the exposure time. In this sense, the exposure time can be adjusted as needed by altering the speed (e.g., processing unit sends instructions to slow down or stop movement) of the flexible band 202 as the non-ink region of the band reaches the energy source 201.

According to one implementation, upon receiving a three-dimensional model of an object to be printed, the processing unit divides the three-dimensional model of the object into a plurality of object layers to be printed and facilitates the deposition of monomer layers 210 associated with each of the plurality of object layers to be printed (i.e., thin monomer layers are deposited on top of previously-formed monomer layers until each of the model object layers are printed). In the present example, multiple thin layers 210 are bonded -- after multiple iterations from the flexible band for example -- to form a three-dimensional object resembling a rocket. Additionally, ink removal device 226 is configured to remove ink from the flexible band 202 as the band rotates about the plurality of rollers 219 from the ink loading element 207 to the energy source 201 and back to the ink loading element 207.

FIG. 3 is a perspective view of a pattern-forming three-dimensional printing system according to an example implementation. The 3D printer 350 includes a flexible pattern transfer band 302 made of a material transparent to the wavelength employed to enable cross-linking (particle bonding) of the deposited monomer. In the case of a visible wavelength (e.g., blue light), the deposited monomer may be made of a large number of readily available plastics. The flexible band 302 is wound around a series of rollers 319 configured to provide clockwise (or counter-clockwise) movement of the band 302. When the flexible band 302 passes in front of the printing station 307 (e.g., thermal or piezoelectric inkjet, etc.), the top surface of the band 302 is covered with a layer of an ink opaque to the illumination wavelength 312 except for the region(s) of the desired 3D printing pattern (no-ink areas). For example, as printing progresses and the band 302 rotates around the system, ink is deposited on the majority of the top surface of the flexible band while a square pattern 308 is formed where no ink is printed. According to one implementation, a water-based black ink may be utilized as a cost-effective solution. However, many other ink solutions may be utilized so long as the ink-coated region is sufficiently opaque in order to prevent cross-linking illumination originating from the illumination source 301 and passing through to the flexible band 302. As the band 302 travels forward and clockwise, the pattern free of ink 308 moves into a position below the light rays 312 from the illumination source 301 so as to allow the light rays 312 to pass through the band 302 and reach a thin layer of monomers 310 held below the band 302 and within monomer tray 309. The system may be configured such that the flexible band 302 slows or stops when the pattern is directly below the light source 301, or the flexible band 302 may continue at the same or normal operating speed. Accordingly, the pattern 308 may be transferred onto the monomer layer 310 so as to cause its cross-linking within the illuminated region and formation of a solid feature 318 having thickness approximately equal to the thickness of the original monomer layer 310. Thereafter, the flexible band 302 is configured to move forward and block the illumination light 312 from reaching the monomer tray 309 at those portions (e.g., area 303) of the flexible band 302 having ink printed thereon. Further movement of the band 302 brings the ink-coated region 303 into an area where the ink is removed from top surface of the flexible band 302.

One implementation of the present disclosure includes multiple ink removing devices such as ink wiper 304, ink washer 305, ink scraper 316, and/or a band drying element 321. Each of the ink removing devices 304, 305, 316 may be employed in tandem or individually as needed so as to achieve sufficient ink removal. Moreover, the removed ink 305 may be collected for disposal or re-use. An ink sensor unit 317 (e.g., a light sensor testing whether light can pass though the band without losses after the ink was removed) may be utilized to test for proper ink removal. Meanwhile, the deposition device 311 is configured to deposit a new thin layer of monomers 310 within the monomer tray 309 so as to cover the newly formed solid square polymer pattern 318. Depositing over the previously formed thin layer of monomers 318 may be accomplished by the deposition device 311 travelling in a parallel direction to the normal plane (z-direction 314) associated with monomer tray 309 to provide a uniform thin layer of high viscosity (i.e., paste-like) monomers, or by flooding the tray 309 with monomers having a low enough viscosity (i.e., free-flowing and illumination/curing from underneath tray). Furthermore, depositing of a new thin monomer film may require that the tray 309 is lowered (directional arrow 315) to maintain a constant distance between the tray 309 and the moving band 302. Finally, the forward-moving band 302 reaches the printing device 307 and the cycle is repeated. The entire process can be computer-controlled via the processing unit and a computing device by providing sequence coordination and instructions between the print coating (via printing element 307) of the flexible band 302, cross-linking illumination (via illumination source 301 and monomer layer 310), and refilling and movement of the monomer tray 309.

Furthermore, it may not be necessary to remove ink and then print a new ink cover pattern at each band rotation. For example, the same printing pattern can be used more than once when the 3D printed feature only requires verticality increase without changing its horizontal dimensions. That is, the same printed band pattern may travel around again such that illumination-induced cross-linking of the newly deposited thin monomer layer is repeated. Additionally, more than one layer of 3D printing may occur during each band rotation by printing more than one pattern feature on the moving band and then transferring each pattern feature onto the monomer layer during a single band rotation. Alternatively, the 3D printing process of the present disclosure can be achieved by replacing the band's rotation with back-and-forth movement (e.g., band replaced by a flat tape), and by placing ink jetting and ink removal facilities on both sides of the illumination device. In yet another implementation, the flexible plastic band 302 can be replaced by a rectangular glass plate configured for bidirectional movement.

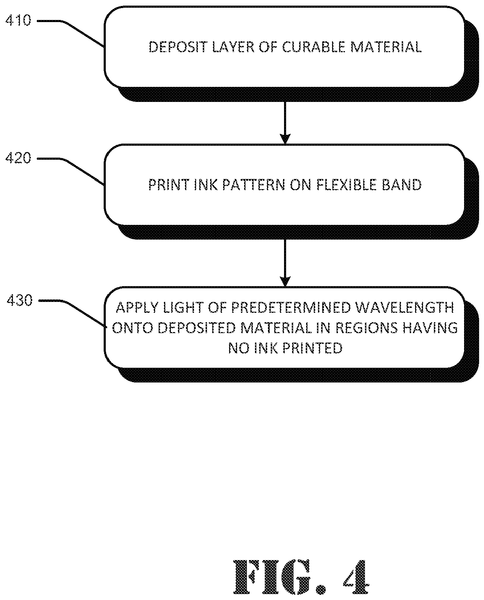

FIG. 4 is a simplified flow chart of the processing steps for providing a pattern-forming three-dimensional printing system according to an example implementation. In step 410, a layer of curable material is provided on the monomer tray. As discussed above, and in accordance with one implementation, a thin layer of monomers may be deposited onto the monomer tray via the deposition device and the monomer deposition control module. Each of the deposited monomer layers is curable by light within a predetermined wavelength range as set by the illumination device. However, implementations of the present disclosure may allow for liquid-based polymerization and other three-dimensional printing techniques that do not require deposition of curable material. Thereafter, in step 420, a desirable ink pattern is printed onto the flexible band via the printing element. As discussed above, the printed ink is impenetrable and opaque to certain light beams and wavelengths. For example, energy or light rays from the illumination device are not able to penetrate through the flexible band onto the monomer tray when the opaque region of the band is directly under the illumination device. The desired ink pattern printed on the flexible band also includes a non-ink area for facilitating the three-dimensional printing process. Next, in step 430, light rays of a predetermined wavelength (i.e., low to high intensity) are applied through the flexible band onto the deposited curable material (e.g., thin monomer layer) based on the regions of the flexible band having no ink printed thereon. Consequently, crosslinking and curing of the deposited material via the non-ink areas and light source are accomplished.

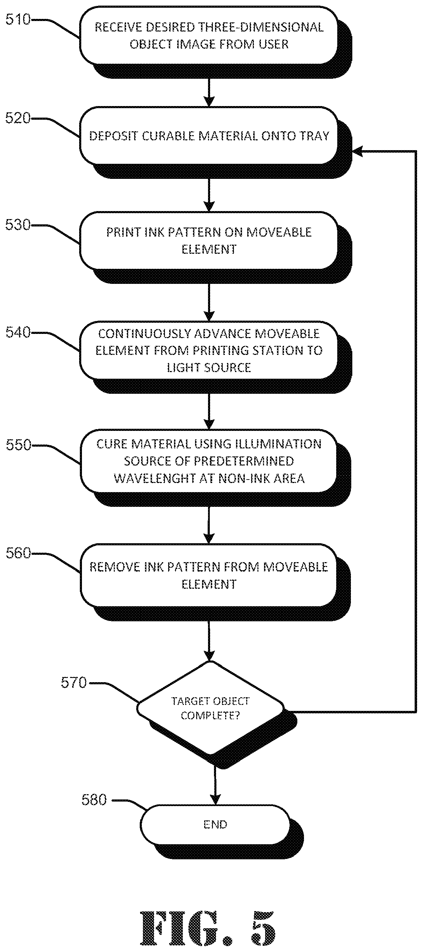

FIG. 5 is a simplified another flow chart of the processing steps for providing a pattern-forming three-dimensional printing system according to an example implementation. In step 510, the three-dimensional printing unit and processor receives an image or model associated with a desired three-dimensional object to be printed. The image may be received directly from a user operating a connected computing device, networked computer, or server. Next, in step 520, the processing unit communicates with the deposition control module to instruct deposition of a thin layer of monomers within the monomer tray. Each of the thin monomer layers are to be associated with layers of an object model to be printed as determined by the processing unit. As mentioned above, deposition may be accomplished by the deposition device travelling in a providing a uniform thin layer of high viscosity monomers within the tray (or over a previously deposited layer), by flooding the monomer tray with free-flowing monomers having a sufficiently low viscosity. Thereafter, an ink pattern is printed on the moveable element (e.g., flexible band) of the printing unit in step 530. In accordance with one implementation, the ink pattern is opaque and impenetrable to light rays from the illumination source. As previously discussed, in step 540 the processing unit controls the plurality of rollers such that the moveable element transitions and moves from the printing station to the illumination source. In step 550, the deposited material (e.g., thin monomer layer) within the holding tray is then cured and cross-linked via the light rays (e.g., emitted from blue diode) of a predetermined wavelength at the non-ink regions of the moveable element. Next, in step 560, the processing unit controls the ink removal devices for removing the ink pattern from the moveable element of the printing device. In addition, sensors may be utilized to confirm that a sufficient amount of ink has been safely removed from the moveable element prior to the next section of the moveable element returning the printing station for receiving the next ink pattern. In step 570, the processing unit determines if additional monomer layers are needed to complete the three-dimensional printing of the desired object, and if so, the cycle is repeated by depositing curable material over the previously deposited and cured thin monomer layer (i.e., formed polymer).

Examples of the present disclosure provide a system and method for pattern-forming three-dimensional printing. Moreover, many advantages are afforded by the printing method according to the implementations described herein. For instance, the pattern-forming three-dimensional print system is highly efficient and cost-effective and also allows for high illumination power output. Such a configuration serves to eliminate the emitted power limitations and the loss of light input power of prior solutions while also reducing the amount to time to complete the pattern transfer. The proposed solution is simplistic and reliable and may be incorporated within any three-dimensional printing environment that utilizes an optically transferred pattern for 3D object formation (e.g., photopolymerization, powder sintering).

Furthermore, while the invention has been described with respect to particular examples, one skilled in the art will recognize that numerous modifications are possible. For instance, in the case of liquid-based or radical polymerization for example, implementations of the present disclosure may include curing and illumination of the curable material from below the tray(e.g., glass) rather than above as depicted. In addition, implementations of the invention may utilize thermal curing in addition to photo-based curing techniques. For example, infrared light may be absorbed or reflected in the ink-coated regions of the flexible band onto the curable material to facilitate the curing and polymerization process.

Moreover, not all components, features, structures, characteristics, etc. described and illustrated herein need be included in a particular example or implementation. If the specification states a component, feature, structure, or characteristic "may", "might", "can" or "could" be included, for example, that particular component, feature, structure, or characteristic is not required to be included. If the specification or claim refers to "a" or "an" element, that does not mean there is only one of the element. If the specification or claims refer to "an additional" element, that does not preclude there being more than one of the additional element.

It is to be noted that, although some examples have been described in reference to particular implementations, other implementations are possible according to some examples. Additionally, the arrangement or order of elements or other features illustrated in the drawings or described herein need not be arranged in the particular way illustrated and described. Many other arrangements are possible according to some examples.

The techniques are not restricted to the particular details listed herein. Indeed, those skilled in the art having the benefit of this disclosure will appreciate that many other variations from the foregoing description and drawings may be made within the scope of the present techniques. Accordingly, it is the following claims including any amendments thereto that define the scope of the techniques.

## Claims

1. A method of pattern-forming three-dimensional printing comprising:
providing a layer of curable material (310), wherein the curable material is curable by energy in a predetermined wavelength range (312);
printing a pattern of ink (303, 305) onto a moveable flexible band (302), wherein the ink is opaque to energy in the predetermined wavelength range; and
applying energy in the predetermined wavelength through (308) the moveable flexible band and onto the deposited material so as to cure the material in those regions on which no ink is printed.

2. The method of claim 1, further comprising:
transitioning regions of the moveable flexible band from a printing source to an illumination source and back to the printing source.

3. The method of claim 2, further comprising:
receiving, at a processing device, a three-dimensional model of an object to be printed;
dividing, via the processing device, the three-dimensional model of the object into a plurality of object layers to be printed; and providing a plurality layers of curable material for each of the plurality of object layers to be printed, wherein a layer of curable material is formed on top of a previously-formed layer of curable material until each of the object layers are printed.

4. The method of claim 2, further comprising removing, via an ink removal unit, the pattern of ink from the moveable flexible band after the layer of curable material has been cured.

5. The method of claim 4, further comprising:
determining, via sensors coupled to the processor, whether a sufficient amount of ink has been removed from the moveable flexible band.

6. The method of claim 1, wherein a plurality of pattern features are printed on the moveable flexible band prior to the pattern of ink being removed from the moveable flexible band.

7. The method of claim 1, wherein the moveable flexible band represents a flexible plastic band.

8. The method of claim 3, wherein the ink removal unit and the printing source are formed on both adjacent sides of the illumination source.

9. A pattern-forming three-dimensional printing system comprising:
a deposition control module (124) configured to deposit a monomer layer (310), wherein the monomer layer is curable by light in a predetermined wavelength range (312),
a printing element (307) configured to print a pattern of ink (303, 305) onto a moveable flexible band, wherein the ink is opaque to light in a predetermined wavelength range; and
an illumination source (301) configured to apply light (312) in the predetermined wavelength through (308) the band and onto a deposited monomer layer so as to cure the monomer layer in those regions on which no ink is printed.

10. The system of claim 9, further comprising:
a plurality of roller members for transitioning regions of the flexible band from the printing element to the illumination source and back to the printing source.

11. The system of claim 9, further comprising:
a processing unit coupled to the printing element, illumination source, and deposition control module, wherein the processing unit is configured to receive a three-dimensional model of an object to be printed and divide the three-dimensional model of the object into a plurality of object layers to be printed;
wherein a layer of curable material is deposited on top of a previously-formed layer of curable material until each of the plurality of object layers are printed.

12. The system of claim 9, further comprising:
an ink removal unit configured to remove the pattern of ink formed on the flexible band after the monomer layer has been cured.

13. The system of claim 12, wherein the ink removal unit includes an ink wiper, ink washer, ink scraper, and a band drying element.

14. The system of claim 13, further comprising: a sensor device coupled to the processor for detecting whether a sufficient amount of ink has been removed from the flexible band.

15. The method of claim 1, wherein
the curable material is a monomer layer provided via a deposition module;
the pattern of ink is printed onto the moveable flexible band via an ink loading element; and
the applied energy is light in the predetermined wavelength, applied via an illumination source and
the method further comprises:
transitioning, via a plurality of roller elements, the flexible band from the ink loading element to the illumination source and back to the ink loading element removing, via an ink removal unit, the pattern of ink from the flexible band after the layer of monomer layer has been cured;
determining, via a processor, whether a desired three-dimensional object has been completed based on the previously cured monomer layer;
determining, via sensors coupled to the processor, whether a sufficient amount of ink has been removed from the moveable flexible band via sensors; and
depositing, via the deposition module, an additional monomer layer on top of the previously cured monomer layer if it is determined that the object has not been completed.

## Patentansprüche

1. Verfahren eines mustererzeugenden dreidimensionalen Druckens, Folgendes umfassend:
Bereitstellen einer Schicht aus härtbarem Material (310),
wobei das härtbare Material durch Energie in einem vorbestimmten Wellenlängenbereich (312) härtbar ist;
Drucken eines Tintenmusters (303, 305) auf ein bewegliches flexibles Band (302), wobei die Tinte für Energie in dem vorbestimmten Wellenlängenbereich undurchlässig ist; und
Anwenden von Energie in der vorbestimmten Wellenlänge durch (308) das bewegliche flexible Band und auf das abgeschiedene Material, um das Material in jenen Bereichen zu härten, auf die keine Tinte gedruckt wird.

2. Verfahren nach Anspruch 1, ferner Folgendes umfassend:
Übergehenlassen von Bereichen des beweglichen flexiblen Bandes von einer Druckquelle zu einer Beleuchtungsquelle und zurück zu der Druckquelle .

3. Verfahren nach Anspruch 2, ferner Folgendes umfassend:
Empfangen eines dreidimensionalen Modells eines zu druckenden Objekts an einer Verarbeitungseinrichtung;
Teilen des dreidimensionalen Modells des Objekts über die Verarbeitungsvorrichtung in mehrere zu druckende Objektschichten; und Bereitstellen mehrerer Schichten aus härtbarem Material für jede der mehreren zu druckenden Objektschichten, wobei eine Schicht aus härtbarem Material auf einer zuvor ausgebildeten Schicht aus härtbarem Material ausgebildet wird, bis jede der Objektschichten gedruckt ist.

4. Verfahren nach Anspruch 2, ferner umfassend das Entfernen des Tintenmusters über eine Tintenentfernungseinheit von dem beweglichen flexiblen Band, nachdem die Schicht aus härtbarem Material gehärtet wurde.

5. Verfahren nach Anspruch 4, ferner Folgendes umfassend:
Bestimmen über mit dem Prozessor gekoppelte Sensoren, ob eine ausreichende Tintenmenge von dem beweglichen flexiblen Band entfernt wurde.

6. Verfahren nach Anspruch 1, wobei mehrere Mustermerkmale auf das bewegliche flexible Band gedruckt werden, bevor das Tintenmuster von dem beweglichen flexiblen Band entfernt wird.

7. Verfahren nach Anspruch 1, wobei das bewegliche flexible Band ein flexibles Kunststoffband darstellt.

8. Verfahren nach Anspruch 3, wobei die Tintenentfernungseinheit und die Druckquelle auf beiden benachbarten Seiten der Beleuchtungsquelle ausgebildet sind.

9. Musterbildendes dreidimensionales Drucksystem, Folgendes umfassend:
ein Abscheidungssteuerungsmodul (124), das zum Abscheiden einer Monomerschicht (310) konfiguriert ist, wobei die Monomerschicht durch Licht in einem vorbestimmten Wellenlängenbereich (312) härtbar ist,
ein Druckelement (307), das zum Drucken eines Tintenmusters (303, 305) auf ein bewegliches flexibles Band konfiguriert ist, wobei die Tinte für Licht in einem vorbestimmten Wellenlängenbereich undurchlässig ist; und
eine Beleuchtungsquelle (301), die zum Anwenden von Licht (312) in dem vorbestimmten Wellenbereich durch (308) das Band und auf eine abgeschiedene Monomerschicht konfiguriert ist, um die Monomerschicht in jenen Bereichen zu härten, auf die keine Tinte gedruckt wird.

10. System nach Anspruch 9, ferner Folgendes umfassend:
mehrere Walzenelemente zum Übergehenlassen von Bereichen des flexiblen Bandes von dem Druckelement zu der Beleuchtungsquelle und zurück zu der Druckquelle.

11. System nach Anspruch 9, ferner Folgendes umfassend:
eine mit dem Druckelement, der Beleuchtungsquelle und dem Abscheidungssteuermodul gekoppelte Verarbeitungseinheit, wobei die Verarbeitungseinheit konfiguriert ist, ein dreidimensionales Modell eines zu druckenden Objekts zu empfangen und das dreidimensionale Modell des Objekts in mehrere zu druckende Objektschichten zu teilen;
wobei eine Schicht aus härtbarem Material auf einer zuvor ausgebildeten Schicht aus härtbarem Material abgeschieden wird, bis jede der mehreren Objektschichten gedruckt ist.

12. System nach Anspruch 9, ferner Folgendes umfassend:
eine Tintenentfernungseinheit, die zum Entfernen des auf dem flexiblen Band ausgebildeten Tintenmusters, nachdem die Monomerschicht gehärtet wurde, konfiguriert ist.

13. System nach Anspruch 12, wobei die Tintenentfernungseinheit einen Tintenwischer, eine Tintenwaschvorrichtung, einen Tintenabstreifer und ein Bandtrocknungselement beinhaltet.

14. System nach Anspruch 13, ferner Folgendes umfassend: eine mit dem Prozessor gekoppelte Sensorvorrichtung, um zu erfassen, ob eine ausreichende Tintenmenge von dem flexiblen Band entfernt wurde.

15. Verfahren nach Anspruch 1, wobei
das härtbare Material eine Monomerschicht ist, die über ein Abscheidungsmodul bereitgestellt wird;
das Tintenmuster über ein Tintenladeelement auf das bewegliche flexible Band gedruckt wird; und
die angewendete Energie Licht in der vorgegebenen Wellenlänge ist, das über eine Beleuchtungsquelle angewendet wird, und
das Verfahren ferner Folgendes umfasst:
Übergehenlassen des flexiblen Bandes über mehrere Walzenelemente von dem Tintenladeelement zu der Beleuchtungsquelle und zurück zu dem Tintenladeelement, was über eine Tintenentfernungseinheit das Tintenmuster von dem flexiblen Band entfernt, nachdem die Schicht der Monomerschicht gehärtet wurde;
Bestimmen über einen Prozessor, ob ein gewünschtes dreidimensionales Objekt auf der Grundlage der zuvor gehärteten Monomerschicht fertiggestellt wurde;
Bestimmen über mit dem Prozessor gekoppelte Sensoren, ob eine ausreichende Tintenmenge von dem beweglichen flexiblen Band entfernt wurde, über Sensoren; und
Abscheiden einer zusätzlichen Monomerschicht über das Abscheidungsmodul auf der zuvor gehärteten Monomerschicht, falls bestimmt wird, dass das Objekt nicht fertiggestellt wurde.

## Revendications

1. Procédé d'impression tridimensionnelle de formation de motif comprenant :
la fourniture d'une couche de matériau durcissable (310),
le matériau durcissable étant durcissable par énergie dans une plage de longueurs d'onde prédéterminée (312) ;
l'impression d'un motif d'encre (303, 305) sur une bande flexible mobile (302), l'encre étant opaque à l'énergie dans la plage de longueurs d'onde prédéterminée ; et
l'application d'énergie dans la longueur d'onde prédéterminée à travers (308) la bande flexible mobile et sur le matériau déposé de manière à durcir le matériau dans les régions sur lesquelles aucune encre n'est imprimée.

2. Procédé selon la revendication 1, comprenant en outre :
le passage de régions de la bande flexible mobile d'une source d'impression à une source d'éclairage et de retour vers la source d'impression.

3. Procédé selon la revendication 2, comprenant en outre :
la réception, au niveau d'un dispositif de traitement, d'un modèle tridimensionnel d'un objet à imprimer ;
la division, par l'intermédiaire du dispositif de traitement, du modèle tridimensionnel de l'objet en une pluralité de couches d'objets à imprimer ; et la fourniture d'une pluralité de couches de matériau durcissable pour chacune de la pluralité de couches d'objets à imprimer, une couche de matériau durcissable étant formée sur une couche de matériau durcissable précédemment formée jusqu'à ce que chacune des couches d'objets soit imprimée.

4. Procédé selon la revendication 2, comprenant en outre l'élimination, par l'intermédiaire d'une unité d'élimination d'encre, du motif d'encre de la bande flexible mobile après que la couche de matériau durcissable a été durcie.

5. Procédé selon la revendication 4, comprenant en outre :
le fait de déterminer, par l'intermédiaire de capteurs couplés au processeur, si une quantité d'encre suffisante a été éliminée de la bande flexible mobile.

6. Procédé selon la revendication 1, dans lequel une pluralité de caractéristiques de motif sont imprimées sur la bande flexible mobile avant que le motif d'encre ne soit éliminé de la bande flexible mobile.

7. Procédé selon la revendication 1, dans lequel la bande flexible mobile représente une bande de plastique flexible.

8. Procédé selon la revendication 3, dans lequel l'unité d'élimination d'encre et la source d'impression sont formées sur les deux côtés adjacents de la source d'éclairage.

9. Système d'impression tridimensionnelle de formation de motif comprenant :
un module de commande de dépôt (124) configuré pour déposer une couche de monomère (310), la couche de monomère étant durcissable par la lumière dans une plage de longueurs d'onde prédéterminée (312),
un élément d'impression (307) configuré pour imprimer un motif d'encre (303, 305) sur une bande flexible mobile, l'encre étant opaque à la lumière dans une plage de longueurs d'onde prédéterminée ; et
une source d'éclairage (301) configurée pour appliquer une lumière (312) dans la longueur d'onde prédéterminée à travers (308) la bande et sur une couche de monomère déposée de façon à durcir la couche de monomère dans les régions sur lesquelles aucune encre n'est imprimée.

10. Système selon la revendication 9, comprenant en outre :
une pluralité d'éléments de rouleau pour faire passer des régions de la bande flexible de l'élément d'impression à la source d'éclairage et de retour vers la source d'impression.

11. Système selon la revendication 9, comprenant en outre :
une unité de traitement couplée à l'élément d'impression, à la source d'éclairage et au module de commande de dépôt, l'unité de traitement étant configurée pour recevoir un modèle tridimensionnel d'un objet à imprimer et diviser le modèle tridimensionnel de l'objet en une pluralité de couches d'objets à imprimer ;
une couche de matériau durcissable étant déposée sur une couche de matériau durcissable précédemment formée jusqu'à ce que chacune de la pluralité de couches d'objets soit imprimée.

12. Système selon la revendication 9, comprenant en outre :
une unité d'élimination d'encre configurée pour éliminer le motif d'encre formé sur la bande flexible après que la couche de monomère a été durcie.

13. Système selon la revendication 12, dans lequel l'unité d'élimination d'encre inclut un dispositif d'essuyage d'encre, un nettoyeur d'encre, un racleur d'encre et un élément de séchage de bande.

14. Système selon la revendication 13, comprenant en outre : un dispositif de détection couplé au processeur pour détecter si une quantité d'encre suffisante a été éliminée de la bande flexible.

15. Procédé selon la revendication 1, dans lequel :
le matériau durcissable est une couche de monomère fournie par l'intermédiaire d'un module de dépôt ;
le motif d'encre est imprimé sur la bande flexible mobile par l'intermédiaire d'un élément de chargement d'encre ; et
l'énergie appliquée est une lumière dans la longueur d'onde prédéterminée, appliquée par l'intermédiaire d'une source d'éclairage et
le procédé comprend en outre :
le passage, par l'intermédiaire d'une pluralité d'éléments de rouleau, de la bande flexible de l'élément de chargement d'encre vers la source d'éclairage et de retour vers l'élément de chargement d'encre,
l'élimination, par l'intermédiaire d'une unité d'élimination d'encre, du motif d'encre de la bande flexible après que la couche de la couche de monomère a été durcie ;
le fait de déterminer, par l'intermédiaire d'un processeur, si un objet tridimensionnel souhaité a été achevé sur la base de la couche de monomère précédemment durcie ;
le fait de déterminer, par l'intermédiaire de capteurs couplés au processeur, si une quantité d'encre suffisante a été éliminée de la bande flexible mobile par l'intermédiaire de capteurs ; et
le dépôt, par l'intermédiaire du module de dépôt, d'une couche de monomère supplémentaire sur la couche de monomère précédemment durcie s'il est déterminé que l'objet n'a pas été achevé.
